## Europäisches Patentamt
## European Patent Office
## Office européen des brevets

(11) Publication number: **0 144 139**
**B1**

# EUROPEAN PATENT SPECIFICATION

(45) Date of publication of patent specification: **11.01.89**

(51) Int. Cl.⁴: **G 11 B 5/127**

(21) Application number: **84307295.0**

(22) Date of filing: **24.10.84**

(54) Magnetic erasing head.

(30) Priority: **24.10.83 JP 198932/83**

(43) Date of publication of application:
**12.06.85 Bulletin 85/24**

(45) Publication of the grant of the patent:
**11.01.89 Bulletin 89/02**

(84) Designated Contracting States:
**DE FR GB NL**

(56) References cited:
**US-A-4 217 613**
**PATENT ABSTRACTS OF JAPAN vol. 7, no. 172,
29th July 1983, page (P-213) (1317)**
**PATENT ABSTRACTS OF JAPAN vol. 7, no. 67,
19th March 1983, page (P-184) (1212)**
**PATENT ABSTRACTS OF JAPAN vol. 7, no. 212,
20th September 1983, page (P-224) (1357)**

(73) Proprietor: **SONY CORPORATION**
**7-35 Kitashinagawa 6-Chome Shinagawa-ku
Tokyo 141 (JP)**

(72) Inventor: **Takeuchi, Giichi c/o Sony Corporation
7-35 Kitashinagawa 6-chome
Shinagawa-ku Tokyo (JP)**
Inventor: **Miyairi, Hidesuke c/o Sony
Corporation
7-35 Kitashinagawa 6-chome
Shinagawa-ku Tokyo (JP)**
Inventor: **Sato, Masanobu c/o Sony Magnetic
Products Inc.
5-6 Kitashinagawa 6-chome
Shinagawa-ku Tokyo (JP)**

(74) Representative: **Ayers, Martyn Lewis Stanley
et al
J.A. KEMP & CO. 14 South Square Gray's Inn
London, WC1R 5EU (GB)**

## Description

The present invention relates to an AC magnetic erasing head of the type in which a gradually decreasing AC magnetic field is applied to a recorded signal on magnetic recording medium so as to erase the recorded signal, and more particularly to a magnetic erasing head where the erasing efficiency is improved.

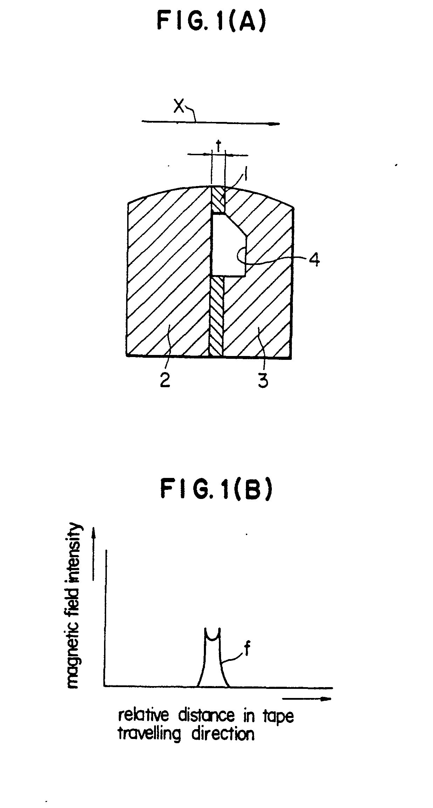

One type of rotating magnetic erasing head used as an erasing head for a video tape recorder (hereinafter referred to as "VTR") in the prior art is called a flying erase head. In such a magnetic erase head, a magnetically recorded signal on a magnetic tape is erased by applying to each recording track a gradually decreasing AC magnetic field. A similar magnetic recording head is formed generally as shown in Figure 1(A) where ferrite core elements 2, 3 of metal oxide magnetic material are connected via a gap spacer 1 of non-magnetic material. The gap spacer 1 is formed by means of sputtering or the like and provides the gap length t of the erasing head. The erasing head is provided with a coil winding hole 4 formed at the trailing side of the head in the magnetic direction (shown by an arrow X) of tape travel with respect to the erasing head during tracking. A coil wound through the coil winding head 4 is supplied with an erasing signal at a frequency of about 5 MHz for example. A magnetic field sufficient to magnetize the magnetic tape to saturation is generated in the gap, and as the magnetic tape travels past the magnetic field applied to the magnetic tape decreases gradually from the saturation value, whereby the residual magnetization on the magnetic tape is converged to zero and the magnetically recorded signal on the magnetic tape is erased.

The distribution of the magnetic field intensity generated from the magnetic gap of the magnetic erasing head is as shown in Figure 1(B) where the magnetic field intensity distribution is sharp at the trailing side (the region designated by f) of the head, in the direction of tape travel. Consequently, the erasing signal frequency may be recorded on the magnetic tape or a re-recording phenomenon may occur whereby the signal recorded on the magnetic tape and intended to be erased is re-recorded in high-frequency bias on the magnetic tape using the erasing signal of prescribed frequency as high-frequency bias.

JP—A—58077013 discloses a similar head whose pair of cores have asymmetrical form. The magnet field intensity distribution in the direction of travel is asymmetric.

As the signal recorded on the magnetic tape is required to be high density, magnetic tapes such as so-called metal magnetic tapes comprising metal magnetic powders having large coercive force are used. In order to erase the signal recorded on the metal magnetic tape, magnetic material having higher saturation magnetic flux density than ferrite, for example, magnetic alloy of Fe-Al-Si series, i.e. so-called sendust alloy is used in a part of the core element.

However, if magnetic material having high saturation magnetic flux density such as sendust alloy is used, the distribution of the magnetic field intensity generated from the magnetic gap will become even more sharp whereby the phenomenon of erase signal recording or the re-recording phenomenon as above described will occur significantly. In so-called evaporated metal magnetic tape where metal magnetic material such as Co is formed on a non-magnetic substrate by means of physical vapor deposition techniques such as vacuum evaporation, such phenomenon occurs more significantly because the magnetic layer is thin.

As above described, the magnetic erasing head in the prior art has disadvantages in that the erasing efficiency is not sufficient.

It is an object of the present invention to provide an improved magnetic erasing head.

According to the present invention, there is provided apparatus for erasing a recorded signal from a magnetic recording medium transported relative to a magnetic erasing head in a predetermined direction of travel (X) which head comprises a pair of magnetic core halves defining an erasing magnetic gap therebetween which in use faces the recording medium, a coil winding opening provided adjacent to said erasing magnetic gap on a first of said magnetic core halves located on the trailing side relative to the direction of travel of said magnetic recording medium and defining, substantially perpendicular to said direction of travel, a depth of said erasing magnetic gap, a coil wound through said coil winding opening, said coil winding opening defining a core portion adjacent to said trailing side and having a thickness substantially equal to said depth of said erasing magnetic gap, means to apply alternating current to the coil for generating erasing magnetic field at said erasing magnetic gap, characterised in that the first of said core halves located on the leading side is formed of a material having higher saturation magnetic flux density than the material of said second core half on the trailing side, and the saturation magnetic flux density and cross-section of said portion of the core element are such that when in use, as the erasing signal applied to the coil increases, said portion is progressively magnetically saturated, the magnetically saturated region extending in said direction of travel.

As will become apparent from the following description, the invention can provide a magnetic erasing head having improved erasing efficiency, suitable to erase signals on a magnetic recording medium having high coercive force and which can avoid recording erase signals and re-recording of previously recorded signals.

The invention will be further described by way of non-limitative example with reference to the accompanying drawings, in which:—

Figure 1(A) is a schematic sectional view of a prior art magnetic erasing head;

Figure 1(B) is a characeristic diagram illustrating magnetic field intensity distribution of the magnetic erasing head in Figure 1(A);

Figure 2(A) is a perspective view of a magnetic erasing head according to the invention;

Figure 2(B) is a view of the magnetic erasing head according to the invention illustrating its surface facing the magnetic tape;

Figure 3 is a sectional view taken in line I—I of Figure 2(B);

Figure 4(A) is a characteristic diagram illustrating magnetic field intensity distribution of the magnetic erasing head in Figure 2(A);

Figure 4(B) is a fragmentary sectional view taken in line I—I of Figure 2(B); and

Figure 5 and Figure 6 are sectional views of the magnetic erasing head illustrating other embodiments of the invention.

An embodiment of the present invention will now be described referring to the accompanying drawings.

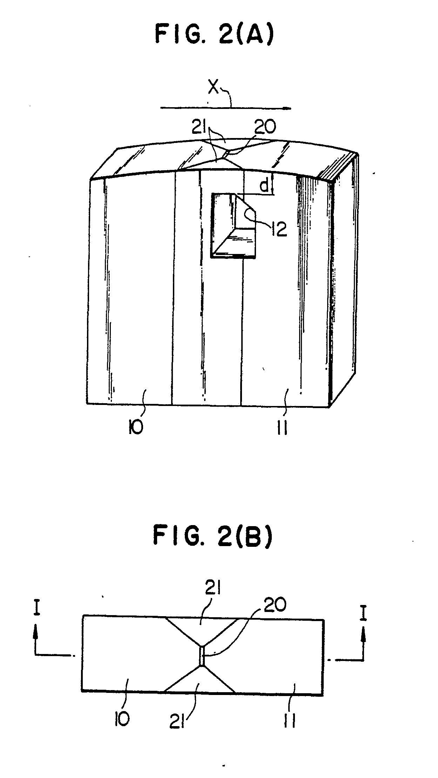

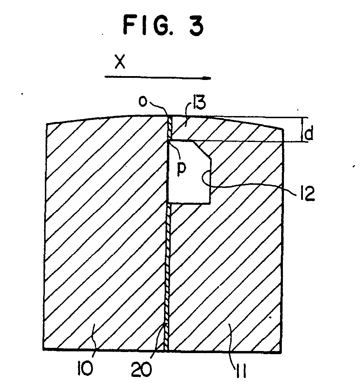

Figure 2(A) shows a perspective view of a magnetic erasing head according to the invention, and Figure 3 shows a sectional view taken in line I—I of Figure 2(B). The magnetic erasing head is used for example as a rotating erasing head for a VTR, and a magnetically recorded signal on magnetic recording medium such as a magnetic tape, for example, is erased using an erase signal with a frequency of 5 MHz for example. The magnetic erasing head is composed of a pair of core elements 10, 11 of soft magnetic material, e.g. MN-Zn ferrite, and a coil winding hole 12 is formed on the core element 11 at the trailing side of the head relative to the direction of tape travel, as shown by arrow X, with respect to the erasing head for performing tracking. A pair of core elements 10, 11 are connected by melt-bonding via a gap spacer 20 formed by sputtering a film of non-magnetic material, e.g. silicon dioxide $SiO_2$ using a glass 21 of non-magnetic material. The gap spacer 20 provides gap length t and an erasing magnetic field is generated from the gap.

A coil is wound through the coil winding hole 12 and supplied with the erase signal, the coil winding hole 12 defining gap depth d. In other words, the coil winding hole 12 is formed on the core element 11 thereby an arm 13 is formed at the magnetic tape contacting side, and the distance between upper end (o) and lower end (p) of the end surface of the arm 13, i.e. the abutting surface of the gap spacer 20 with the core element 10, becomes the gap depth d. The gap depth d, being the distance between the upper end (o) and the lower end (p), corresponds to the length of the abutting surface in the direction perpendicular to the surface which contacts the magnetic tape.

The thickness of the arm 13 in depth direction adjacent to the magnetic gap is substantially equal to the gap depth in the direction of the trailing side. The surface continuing to the point defining the gap depth d of the coil winding hole 12, i.e. the lower end (p), forms the region having a thickness substantially equal to the gap depth adjacent to the magnetic gap on the core element 11.

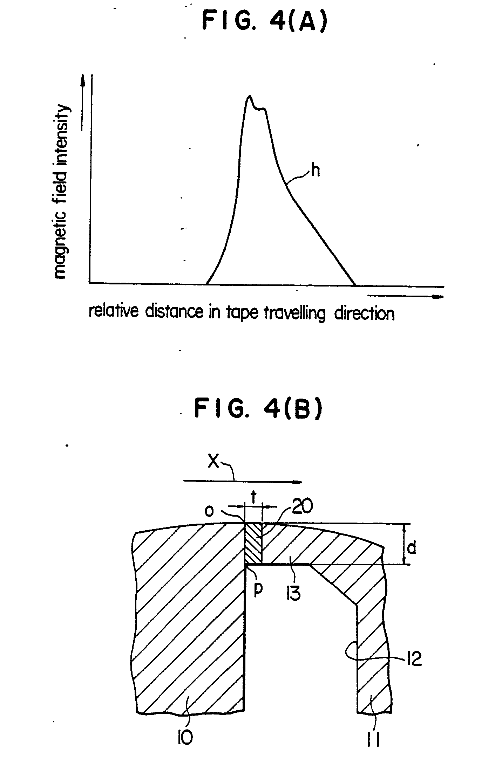

In the magnetic erasing head constituted as above described, distribution of the erasing magnetic field intensity generated from the gap is as shown in Figure 4(A). It will be seen that the distribution of the magnetic field intensity is asymmetric with respect to the gap forming position. That is, the field intensity distribution at the head trailing side (the region designated by h in the Figure) has a gentle slope. In Figure 4(A) the magnetic field intensity is along the ordinate and the distance from the gap centre in the direction of tape travel is on the abscissa. Figure 4(B) shows the fragmentary sectional view taken in line I—I of Figure 2(B) and corresponds in position to Figure 4A. The reason for the magnetic field intensity distribution having a gentle slope at the trailing side of the head is that as the erasing current flowing in the coil would through the coil winding hole 12 increases, the arm 13 of the core element 11 is progressively magnetically saturated and the magnetically saturated region extends to the direction of the magnetic tape trailing side in comparison to the conventional erasing head. Consequently, when the magnetic field applied to the magnetic tape decreases gradually from the strength sufficient to saturate the magnetization on the magnetic tape as the magnetic tape travels relative to the head and the residual magnetization on the magnetic tape is converged to zero, neither the erasing signal of prescribed frequency is recorded on the magnetic tape nor does the re-recording phenomenon occur whereby signal recorded on the magnetic tape intended to be erased is re-recorded on the magnetic tape using the erasing signal of prescribed frequency as high-freqency bias. Thus, the erasing efficiency is improved according to the invention.

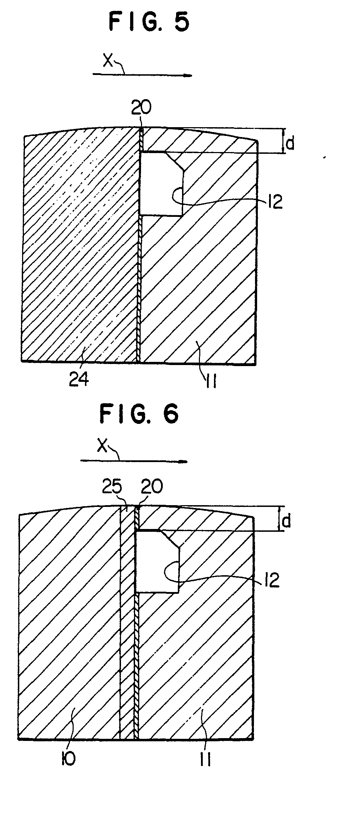

As shown in Figure 5, a core element 24 at leading side in the magnetic tape relative travelling direction may be constituted using soft magnetic material having high saturation magnetic flux density, for example, Fe-Al-Si series alloy, i.e. so-called sendust alloy, in order to correspond to metal magnetic tape having high coercive force Hc.

As shown in Figure 6, a thin film 25 of magnetic material such as sendust may be formed only at the leading side of the gap spacer 20. In this constitution, the magnetic field intensity generated from the magnetic gap can be strengthened, and if material having higher saturation magnetic flux density is located at the leading side with respect to the gap spacer or material having lower saturation magnetic flux density is located at the trailing side, the magnetic field intensity distribution at the trailing side has a gentle slope. Consequently, when magnetic material of high saturation magnetic flux density is used corresponding to the metal magnetic tape having high coercive force, the phenomenon of recording of the erasing signal or the re-recording phenomenon as seen significantly in the prior art can be effectively prevented. Also such phenomenon particularly occurring at the evaporated metal magnetic tape of this magnetic layer can be prevented, and the erasing efficiency to erase the signal recorded on the evaporated metal magnetic tape can be improved according to the invention.

Regarding material for the core elements 10, 11, Mn-Zn ferrite as well as Ni-Zn ferrite may be used. Regarding magnetic material having high saturation magnetic flux density, in addition to alloy of iron-aluminium-silicon series (Fe-Al-Si series), so-called sendust as above described, amorphous magnetic material having composition represented by M- X may be used. Wherein M designates Fe, Co (cobalt), Ni, and X designates for example Si, B (boron), P (phosphorus), C (carbon). Specifically, example of the amorphous material is magnetic material Fe-Co-Si-B series.

The magnetic erasing head of the invention may be used for only as a rotating erasing head for VTR but also as fixed type erasing head.

## Claims

1. Apparatus for erasing a recorded signal from a magnetic recording medium transported relative to a magnetic erasing head in a predetermined direction of travel (X) which head comprises a pair of magnetic core halves (10, 11) defining an erasing magnetic gap (20) therebetween which in use faces the recording medium, a coil winding opening (12) provided adjacent to said erasing magnetic gap (20) on a first (11) of said magnetic core halves located on the trailing side relative to the direction of travel of said magnetic recording medium and defining, substantially perpendicular to said direction of travel, a depth of said erasing magnetic gap, a coil wound through said coil winding opening, said coil winding opening defining a core portion (13) adjacent to said trailing side and having a thickness substantially equal to said depth of said erasing magnetic gap, means to apply an alternating current to the coil for generating erasing magnetic field at said erasing magnetic gap, characterised in that the first (10) of said core halves located on the leading side is formed of a material having higher saturation magnetic flux density than the material of said second core half (11) on the trailing side, and the saturation magnetic flux density and cross-section of said portion (13) of the core element (11) are such that when in use, as the erasing signal applied to the coil increases, said portion (13) is progressively magnetically saturated, the magnetically saturated region extending in said direction of travel.

2. Apparatus according to claim 1, wherein said magnetic core halves (10, 11) are formed of magnetic ferrite.

3. Apparatus according to claim 1, wherein said magnetic core half on said leading side (24) is formed of magnetic ferrite core having a thin film (25) of magnetic alloy having saturation magnetic flux density larger than said magnetic ferrite on one surface of said ferrite core (10), and said thin film of magnetic alloy faces to said magnetic erasing gap (20).

4. Apparatus according to claim 3, wherein said magnetic alloy is a Fe-Al-Si system alloy.

## Patentansprüche

1. Vorrichtung zum Löschen eines aufgezeichneten Signals von einem magnetischen Aufzeichnungsträger, der relativ zu einem magnetischen Löschkopf in einer bestimmten Bewegungsrichtung (X) transportiert wird, wobei der Kopf ein Paar von magnetischen Kernhälften (10, 11) umfaßt, zwischen denen ein Lösch-Magnetspalt (20) festgelegt ist, welcher im Gebrauch zu dem Aufzeichnungsträger hinweist, mit einer Spulenwicklungsöffnung (12), die neben dem genannten Lösch-Magnetspalt (20) in einer ersten Kernhälfte (11) der genannten magnetischen Kernhälften vorgesehen ist, welche auf der Rückseite relativ zu der Bewegungsrichtung des magnetischen Aufzeichnungsträgers angeordnet ist und welche weitgehend rechtwinklig zu der genannten Bewegungsrichtung eine Tiefe des genannten Lösch-Magnetspalts festlegt, mit einer Spule, die durch die genannte Spulenwicklungsöffnung gewickelt ist, welche einen Kernteil (13) neben der genannten Rückseite festlegt und eine Dicke aufweist, die weitgehend gleich der genannten Tiefe des Lösch-Magnetspalts ist, mit einer Einrichtung zur Abgabe eines Wechselstroms an die Spule zur Erzeugung eines magnetischen Löschfeldes an dem Lösch-Magnetspalt, dadurch gekennzeichnet, daß die auf der Vorderseite angeordnete erste Kernhälfte (10) der Kernhälften aus einem Material gebildet ist, welches eine höhere Sättigungs-Magnetflußdichte aufweist als das Material der auf der Rückseite angeordneten zweiten Kernhälfte (11), und daß die Sättigungs-Magnetflußdichte und der Querschnitt des genannten Teiles (13) des Kernelements (11) so sind, daß im Gebrauch bei Zunahme des an die Spule abgegebenen Löschsignals der genannte Teil (13) fortschreitend magnetisch gesättigt wird, wobei der magnetisch gesättigte Bereich sich in der genannten Bewegungsrichtung erstreckt.

2. Vorrichtung nach Anspruch 1, wobei die genannten magnetischen Kernhälften (10, 11) aus magnetischem Ferrit gebildet sind.

3. Vorrichtung nach Anspruch 1, wobei die magnetische Kernhälfte auf der Vorderseite (24) aus einem magnetischen Ferritkern gebildet ist, der eine Dünnschicht (2) einer magnetischen Legierung mit einer Sättigungs-Magnetflußdichte aufweist, die höher ist als die des magnetischen Ferrits auf einer Oberfläche des genannten Ferritkerns (10), und wobei die genannte Dünnschicht der magnetischen Legierung zu dem magnetischen Löschspalt (20) hinweist.

4. Vorrichtung nach Anspruch 3, wobei die magnetische Legierung eine Fe-Al-Si-System-Legierung ist.

## Revendications

1. Appareil d'effacement d'un signal enregistré sur un support d'enregistrement magnétique entraîné par rapport à une tête d'effacement magnétique dans une direction prédéterminée de déplacement (X) cette tête d'effacement magnétique comportant une paire de demi-noyaux magnétiques (10, 11) définissant entre eux un entrefer magnétique d'effacement (20) qui, en utilisation, se trouve en face du support d'enregistrement, une ouverture de bobinage d'enroulement (12) prévue près dudit entrefer magnétique d'effacement sur un premier (11) desdits demi-noyaux magnétiques, situé sur le côté arriére par rapport à la direction de déplacement dudit support d'enregistrement magnétique et définissant, pratiquement perpendiculairement à ladite direction de déplacement, une profondeur dudit entrefer magnétique d'effacement, une bobine enroulée par ladite ouverture d'enroulement de bobine, ladite ouverture d'enroulement de bobine définissant une partie de noyau (13) voisine dudit côté arrière et ayant une épaisseur pratiquement égale à ladite profondeur dudit entrefer magnétique d'effacement, un dispositif d'application d'un courant alternatif à la bobine pour produire un champ magnétique d'effacement audit entrefer magnétique d'effacement, caractérisé en ce que le premier (10) desdits demi-noyaux, situé sur le côté avant est fait d'un matériau ayant une plus forte densité du flux magnétique à saturation que la matière dudit second demi-noyau (11) sur le côté arrière, et la densité du flux magnétique à saturation et la section de ladite partie (13) de l'élément de noyau (11) sont telles que, en utilisation, quand le signal d'effacement appliqué à la bobine augmente, ladite partie (13) est progressivement saturée magnétiquement, la région saturée magnétiquement s'étendant dans ladite direction de déplacement.

2. Appareil selon la revendication 1, dans lequel lesdits demi-noyaux magnétiques (10, 11) sont formés d'un ferrite magnétique.

3. Appareil selon la revendication 1, dans lequel ledit demi-noyau magnétique sur ledit côté avant (24) est fait d'un noyau de ferrite magnétique portant une mince pellicule (20) d'un alliage magnétique ayant une densité du flux magnétique à saturation supérieure à celle dudit ferrite magnétique sur une surface dudit noyau magnétique (10), et ladite mince pellicule d'un alliage magnétique se trouve en face dudit entrefer d'effacement magnétique.

4. Appareil selon la revendication 3, dans lequel ledit alliage magnétique est un alliage du système Fe-Al-Si.

# FIG. 1(A)

# FIG. 1(B)

relative distance in tape travelling direction

# FIG. 2(A)

# FIG. 2(B)

# FIG. 3

# FIG. 4(A)

magnetic field intensity

h

relative distance in tape travelling direction

# FIG. 4(B)

X

t

o

20

d

p

13

12

10

11

# FIG. 5

# FIG. 6